# EUROPEAN PATENT SPECIFICATION

(11) **EP 3 467 089 B1**
(45) Date of publication and mention of the grant of the patent: **07.10.2020**
(21) Application number: 17809680.6
(22) Date of filing: 05.06.2017
(51) Int. Cl.: C12G 1/022, C12H 6/00

(54) **METHOD FOR MAKING SWEET WINE WITH GRAPE FLAVOR, AND SWEET WINE WITH GRAPE FLAVOR**
VERFAHREN ZUR HERSTELLUNG VON SÜSSEM WEIN MIT TRAUBENGESCHMACK SOWIE SÜSSER WEIN MIT TRAUBENGESCHMACK
PROCÉDÉ DE FABRICATION DE VIN DOUX À ARÔME DE RAISIN ET VIN DOUX À ARÔME DE RAISIN

(30) Priority: 06.06.2016 CN 201610395131
(43) Date of publication of application: 10.04.2019
(73) Proprietor: Dong, Boxing, Fujian 363300 (CN)
(72) Inventor: Dong, Boxing, Fujian 363300 (CN)
(74) Representative: HGF
(86) International application number: PCT/CN2017/087120
(87) International publication number: WO 2017/211241

(56) References cited:
- CN-A- 102 899 214
- CN-A- 104 498 247
- CN-A- 105 802 781
- KR-B1- 100 490 979
- Ronald S. Jackson: "Specific and distinctive wine styles" In: "Wine Science : Principles and Applications", 31 May 2014 (2014-05-31), Elsevier Science & Technology, XP055575861, ISBN: 978-0-12-381468-5 * page 733, right-hand column, paragraph 1 - page 734, left-hand column, paragraph 1 * * page 735, left-hand column, paragraph 2 *
- Richard Mayson: "Making Port: tradition and technology" In: "Port and the Douro", 12 November 2012 (2012-11-12), Infinite ideas, XP055575499, ISBN: 978-1-908984-17-3 pages 125-140, * the whole document *
- Anonymous: "Fortified wine - Wikipedia", , 7 May 2016 (2016-05-07), XP055575493, Retrieved from the Internet: URL:https://en.wikipedia.org/w/index.php?t itle=Fortified_wine&oldid=719067506 [retrieved on 2019-03-28]

## Description

### Technical Field

The present disclosure relates to a method for producing a sweet wine, and more specifically to a method for producing a sweet wine with grape flavor, and a sweet wine produced according to the method.

### Background Art

Sweet wine or sweet liquor generally refers to a wine or liquor containing 2.5% or more of sucrose or glucose. The sugar in the wine or liquor is generally derived from the brewing material of the wine or liquor, *i.e.,* a sugar which is originally present in the brewing material, and a sugar which may be derived from the hydrolysis of starch or polysaccharide in the brewing material.

During the brewing process, the sugar is gradually converted into alcohol, which increases the alcohol content of the wine or liquor and reduces the sugar content thereof. Therefore, a wine or liquor that is sufficiently fermented and/or distilled has low sugar content; for example, liquor and spirits, beer, and wine, which are commonly found in the market, have low sugar content and thus do not have obvious mouthfeel of sweet taste.

In order to obtain a unique mouthfeel of both high alcohol content and high sugar content, the sugar can be added into a strong liquor, or a strong liquor can be mixed with a partially fermented liquor having a higher sugar content. However, the addition of the sugar into the strong liquor suffers from difficulty in dissolving and mixing, while the mixing of the strong liquor with the liquor having higher sugar content has the disadvantages that the mouthfeel is inharmonious and the sugar content is still insufficient.

Port is an example of a fortified sweet wine popular in Europe produced by the addition of strong alcoholic spirit, commonly brandy spirit, to a traditional grape fermentation, e.g. at 26-28°C for about 2-3 days, relying on yeast cells whereby a high residual sugar content is maintained. For further information on port production reference may be made to the discussion of such production by R. Jackson in " Wine Science: Principles and Applications " (Elsevier Science and Technology, 2014) and by R. Mayson in "Port and the Douro" (Infinite ideas 2012), especially the section "Making Port: tradition and technology"; see also Wikipedia information on " Fortified Wine" available at the priority date.

Korean Patent KR100490979 discloses a method for making a fortified wine based on glutinous rice using Koji for fermentation. Jiuqu is a similar fermentation starter product with long history of use in Chinese conventional liquor production obtained by growth of microbial species on a starchy substrate such as rice grains or a dough made from cereal grains.

The present disclosure provides a special method for producing a wine by combining the process of producing liquor and spirits with the process of producing wine, wherein the unique property of natural fermentation of the grapes is not used for the production, but the grapes are mixed with jiuqu to perform jiuqu fermentation for a short period. A liquor or spirit is then added therein and the resulting product is left standing for a long period, e.g. preferably 18-22 days, whereby the sugar in the grapes is sufficiently retained so as to give a sweet wine with grape flavor that has both high sweetness and harmonious taste.

### Summary of the invention

The present disclosure refers to a method for producing a sweet wine with grape flavor, the method comprising:
placing grapes and jiuqu in a fermenter;
keeping a temperature of the fermenter at a fermentation temperature of 25°C to 38°C, preferably 28°C to 32°C, most preferably 30°C, for 15 to 40 hours, preferably 18 to 24 hours, most preferably 20 hours;
adding liquor or spirit into the fermenter, in which an alcohol content of the liquor or spirit is not lower than 15%, preferably not lower than 40%, further preferably not lower than 50%, most preferably 58%;
sealing the fermenter for 10 to 30 days, preferably 18 to 22 days, further preferably 20 days; and
filtering a fermented product in the fermenter to obtain the sweet wine with grape flavor.

In some embodiments of the present disclosure, the method according to the present disclosure further comprises placing grape stems together with the grapes and the jiuqu in the fermenter.

In some embodiments of the present disclosure, during the process of "keeping a temperature of the fermenter at a fermentation temperature", the fermenter could partially communicate with ambient atmosphere.

In some embodiments of the present disclosure, the method according to the present disclosure further comprises a step of washing the grapes with warm water and drying the washed grapes before placing the grapes in the fermenter.

In some embodiments of the present disclosure, the method according to the present disclosure further comprises a step of washing the grape stems with warm water and drying the washed grape stem before placing the grape stems in the fermenter.

In some embodiments of the present disclosure, the weight ratio of the grapes to the grape stems is from 5:1 to 20:1, preferably from 8:1 to 12:1, and most preferably about 10:1.

In some embodiments of the present disclosure, the jiuqu is maiqu, xiaoqu, hongqu, daqu or fuqu.

In some embodiments of the present disclosure, the weight ratio of the grapes to the jiuqu is from 100:4 to 100:10, preferably from 100:5 to 100:9, and most preferably 100:8.

In some embodiments of the present disclosure, the fermenter can be a ceramic container, a glass container, a stainless steel container, an oak barrel, or other containers that can be used in brewing, preferably a ceramic container or an oak barrel.

In some embodiments of the present disclosure, the liquor or spirit can be fuyu-flavor liquor or spirit, jiang-flavor liquor or spirit, nong-flavor liquor or spirit, mild-flavor liquor or spirit, mi-flavor liquor or spirit, sesame-flavor liquor or spirit, mixed-flavor liquor or spirit, or feng-flavor liquor or spirit.

In some embodiments of the present disclosure, the weight ratio of the grapes to the liquor or spirit is from 1:2 to 2:1, preferably from 1:1.5 to 1.5:1, further preferably from 1:1.2 to 1.2:1, and most preferably 1:1.

In some embodiments of the present disclosure, the method according to the present disclosure further comprises partially crushing the grapes before placing the grapes in the fermenter.

The present disclosure further relates to a sweet wine with grape flavor produced according to the method of the present disclosure.

Some other embodiments of the present disclosure further comprises a wine obtained by blending the sweet wine with grape flavor produced according to the method of the present disclosure with additional additives, wherein the additional additives include but not limited to food additives such as saccharides, flavoring agents, preservatives and the like.

### Detailed Description

The following examples disclose some exemplary embodiments of the present disclosure to assist in understanding the technical solutions of the present disclosure, but it should be understood that the disclosure is not limited to the following examples.

### Example 1

In a specific embodiment of the present disclosure, a sweet wine with grape flavor was produced by the following steps:
100 kg of grapes of Fu'an Kyoho grape, 10 kg of grape stems and 0.8 kg of xiaoqu were placed in a stainless steel fermenter;
the temperature of the fermenter was kept at a fermentation temperature of 30°C for 20 hours;
100 kg of homemade 52-degree rice liquor was added into the fermenter;
the fermenter was sealed and stood for 20 days; and
the sweet wine with grape flavor was obtained after filtering the fermented product in the fermenter.

### Example 2

In another specific embodiment of the present disclosure, a sweet wine with grape flavor was produced by the following steps:
0.5 kg of grapes of Fu'an Kyoho grape and 2 g of maiqu were placed in a 20-liter ceramic fermenter;
the temperature of the fermenter was kept at a fermentation temperature of 33°C for 30 hours;
0.75 kg of 42-degree Luzhou Lao Jiao touqu nong-flavor liquor was added into the fermenter;
the fermenter was sealed and stood for 28 days; and
the sweet wine with grape flavor was obtained after filtering the fermented product in the fermenter.

By using the sweet wines produced by the above method and a reinforced wine (Lillet wine), a double-blind test was conducted among 30 Chinese consumers who liked drinking liquor or spirit, and the following evaluation results were obtained:

| The number of people who answered yes to the following questions | Example 1 | Example 2 | Lillet wine |
|---|---|---|---|
| "This kind of wine belongs to liquor or spirit" | 23/30 | 25/30 | 0/30 |
| "This kind of wine belongs to grape wine" | 3/30 | 2/30 | 25/30 |
| "I prefer this kind of wine" | 10/30 | 15/30 | 5/30 |
| "This kind of wine tastes sweeter" | 12/30 | 15/30 | 3/30 |
| "This kind of wine has bitter mouthfeel" | 0/30 | 0/30 | 0/30 |
| "The mouthfeel of this kind of wine is harmonious and well-acceptable" | 30/30 | 30/30 | 30/30 |

The sweet wines with grape flavor produced according to the above embodiments of the present disclosure have the following significant differences compared to the reinforced wine (Lillet wine):
1. The sweet wines of the present disclosure have higher sweetness (generally higher than 60 g/L, and may be higher than 70 g/L, even higher than 80 g/L);
2. The sweet wines of the present disclosure have a taste consistent with that of liquor and spirit and possess slight grape aroma. They generally belong to the taste and aroma of grain liquor and spirits; however, Lillet wine has a consistent grape flavor and belongs to the taste and aroma of fruit wine; and
3. Drinkers who are accustomed to grain liquor and spirits in China prefer the sweet wine according to the present disclosure, and do not favor Lillet wine.

The grape fermentation process of the present disclosure relies on the addition of jiuqu, which is totally different from the process that relies on the natural fermentation of grapes in the traditional brewing technology of wine. Therefore, unlike the need to completely crush the grapes in the traditional process, it is substantially unnecessary to crush the grapes in the present disclosure or it is possible to partially crush the grapes, in order to ferment together with the jiuqu. In such way, most of sugar in the grapes is retained, resulting in higher sugar content in the final sweet wine. The final sweet wine does not have the taste formed by the fermentation of the grapes, but possesses the consistent liquor or spirit mouthfeel formed by the fermentation with the jiuqu and meanwhile has the aroma of the grapes (the aroma of the unfermented or less fermented grapes).

In addition, the sweet wine according to the present disclosure does not need the addition of additional additives except the jiuqu and liquor or spirit during the brewing process, and does not need SO₂ which is usually added during the general fermentation process of grape wine. Therefore, from the viewpoint of the taste or content, the sweet wine of the present disclosure is totally different from the grape wine, and suitable for consumers with different habits.

The grape stems contain rich potassium element, which can maintain the homeostasis and the normal neuromuscular function of the human. In some embodiments of the present disclosure, the grape stems and the grapes are used together as the materials for producing wine, and the sweet wine with good mouthfeel and rich nutrient is obtained. In contrast, the grape stems are discarded in the grape wine manufacturing processes.

## Claims

1. A method for producing a sweet wine with grape flavor comprising:
placing grapes and jiuqu in a fermenter;
keeping a temperature of the fermenter at a fermentation temperature of 25°C to 38°C for 15 to 40 hours;
adding liquor or spirit into the fermenter, in which an alcohol content of the liquor or spirit is not lower than 15%;
sealing the fermenter for 10 to 30 days; and
filtering a fermented product in the fermenter to obtain the sweet wine with grape flavor.

2. The method of claim 1 further comprising placing grape stems together with the grapes and the jiuqu in the fermenter.

3. The method of claim 1, wherein during the process of "keeping a temperature of the fermenter at a fermentation temperature", the fermenter partially communicates with ambient atmosphere.

4. The method of claim 1 further comprising a step of washing the grapes with warm water and drying the washed grapes before placing the grapes in the fermenter.

5. The method of claim 2 further comprising a step of washing the grape stems with warm water and drying the washed grape stems before placing the grape stems in the fermenter.

6. The method of claim 1, wherein the jiuqu is maiqu, xiaoqu, hongqu, daqu or fuqu.

7. The method of claim 1, wherein the liquor or spirit is fuyu-flavor liquor or spirit, jiang-flavor liquor or spirit, nong-flavor liquor or spirit, mild-flavor liquor or spirit, mi-flavor liquor or spirit, sesame-flavor liquor or spirit, mixed-flavor liquor or spirit, or feng-flavor liquor or spirit.

8. The method of claim 1, wherein the alcohol content of the liquor or spirit is not lower than 50%.

9. The method of claim 1 further comprising partially crushing the grapes before placing the grapes in the fermenter.

10. The method of claim 1, wherein the temperature of the fermenter is kept at a fermentation temperature of 28°C to 32°C.

11. The method of claim 1, wherein the temperature of the fermenter is kept at the fermentation temperature for 18 to 24 hours.

12. The method of claim 1, wherein the fermenter is sealed for 18 to 22 days.

13. A sweet wine with grape flavor produced according to the method of any one of claims 1 to 12.

## Patentansprüche

1. Verfahren zur Herstellung von süßem Wein mit Traubengeschmack, umfassend:
Platzieren von Trauben und Jiuqu in einem Fermentationskessel;
Halten einer Temperatur des Fermentationskessels auf einer Fermentationstemperatur von 25 °C bis 38 °C über 15 bis 40 Stunden;
Zugabe eines alkoholischen Getränks oder einer Spirituose in den Fermentationskessel, wobei der Alkoholgehalt des alkoholischen Getränks oder der Spirituose niedriger ist als 15%;
Verschließen des Fermentationskessels über 10 bis 30 Tage; und
Filtern eines fermentierten Produkts in dem Fermentationskessel, um den süßen Wein mit Traubengeschmack zu erhalten.

2. Verfahren nach Anspruch 1, ferner umfassend das Platzieren von Traubenstielen gemeinsam mit den Trauben und Jiuqu in dem Fermentationskessel.

3. Verfahren nach Anspruch 1, wobei während dem Prozess des "Haltens einer Temperatur des Fermentationskessels auf einer Fermentationstemperatur" der Fermentationskessel teilweise mit der umgebenden Atmosphäre kommuniziert.

4. Verfahren nach Anspruch 1, ferner umfassend einen Schritt des Waschens der Trauben mit warmem Wasser und Trocknen der gewaschenen Trauben, bevor die Trauben im dem Fermentationskessel platziert werden.

5. Verfahren nach Anspruch 2, ferner umfassend einen Schritt des Waschens der Traubenstiele mit warmem Wasser und Trocknen der gewaschenen Traubenstiele, bevor die Traubenstiele im dem Fermentationskessel platziert werden.

6. Verfahren nach Anspruch 1, wobei das Jiuqu Maiqu, Xiaoqu, Hongqu, Daqu oder Fuqu ist.

7. Verfahren nach Anspruch 1, wobei das alkoholische Getränk oder die Spirituose ein alkoholisches Getränk oder eine Spirituose mit Fuyu-Geschmack, ein alkoholisches Getränk oder eine Spirituose mit Jiang-Geschmack, ein alkoholisches Getränk oder eine Spirituose mit Nong-Geschmack, ein alkoholisches Getränk oder eine Spirituose mit mildem Geschmack, ein alkoholisches Getränk oder eine Spirituose mit Mi-Geschmack, ein alkoholisches Getränk oder eine Spirituose mit Sesam-Geschmack, ein alkoholisches Getränk oder eine Spirituose mit gemischtem Geschmack oder ein alkoholisches Getränk oder eine Spirituose mit Feng-Geschmack ist.

8. Verfahren nach Anspruch 1, wobei der Alkoholgehalt des alkoholischen Getränks oder der Spirituose nicht niedriger ist als 50%.

9. Verfahren nach Anspruch 1, ferner umfassend das teilweise Zerquetschen der Trauben, bevor die Trauben in dem Fermentationskessel platziert werden.

10. Verfahren nach Anspruch 1, wobei der Fermentationskessel auf einer Fermentationstemperatur von 28 °C bis 32 °C gehalten wird.

11. Verfahren nach Anspruch 1, wobei die Temperatur des Fermentationskessels über 18 bis 24 auf der Fermentationstemperatur gehalten wird.

12. Verfahren nach Anspruch 1, wobei der Fermentationskessel über 18 bis 22 Tage dicht verschlossen gehalten wird.

13. Süßer Wein mit Traubengeschmack, der gemäß dem Verfahren nach einem der Ansprüche 1 bis 12 hergestellt wird.

## Revendications

1. Procédé de production d'un vin doux au goût de raisin comprenant les étapes consistant à :
placer des raisins et du jiuqu dans un fermenteur ;
maintenir une température du fermenteur à une température de fermentation de 25 °C à 38 °C pendant 15 à 40 heures ;
ajouter une liqueur ou un alcool dans le fermenteur, la teneur en alcool de la liqueur ou de l'alcool n'étant pas inférieure à 15 % ;
sceller le fermenteur pendant 10 à 30 jours ; et
filtrer un produit fermenté dans le fermenteur pour obtenir le vin doux au goût de raisin.

2. Procédé selon la revendication 1 comprenant en outre l'étape consistant à placer des tiges de raisin avec les raisins et le jiuqu dans le fermenteur.

3. Procédé selon la revendication 1, pendant l'étape consistant à « maintenir une température du fermenteur à une température de fermentation », le fermenteur communiquant partiellement avec l'atmosphère ambiante.

4. Procédé selon la revendication 1 comprenant en outre une étape consistant à laver les raisins à l'eau chaude et à sécher les raisins lavés avant de placer les raisins dans le fermenteur.

5. Procédé selon la revendication 2 comprenant en outre une étape consistant à laver les tiges de raisin à l'eau chaude et à sécher les tiges de raisin lavées avant de placer les tiges de raisin dans le fermenteur.

6. Procédé selon la revendication 1, le jiuqu étant du maiqu, xiaoqu, hongqu, daqu ou fuqu.

7. Procédé selon la revendication 1, la liqueur ou l'alcool étant une liqueur ou un alcool à saveur de fuyu, une liqueur ou un alcool à saveur de jiang, une liqueur ou un alcool à saveur de nong, une liqueur ou un alcool à saveur douce, une liqueur ou un alcool à saveur de mi, une liqueur ou un alcool à saveur de sésame, une liqueur ou un alcool à saveur mixte, ou une liqueur ou un alcool à saveur de feng.

8. Procédé selon la revendication 1, la teneur en alcool de la liqueur ou de l'alcool n'étant pas inférieure à 50 %.

9. Procédé selon la revendication 1 comprenant en outre l'étape consistant à broyer partiellement les raisins avant de placer les raisins dans le fermenteur.

10. Procédé selon la revendication 1, la température du fermenteur étant maintenue à une température de fermentation comprise entre 28 °C et 32 °C.

11. Procédé selon la revendication 1, la température du fermenteur étant maintenue à la température de fermentation pendant 18 à 24 heures.

12. Procédé selon la revendication 1, le fermenteur étant scellé pendant 18 à 22 jours.

13. Vin doux au goût de raisin produit selon le procédé selon l'une quelconque des revendications 1 à 12.
